# EUROPEAN PATENT APPLICATION

(11) **EP 2 752 806 A1**
(43) Date of publication of application: **09.07.2014**
(21) Application number: 14275002.5
(22) Date of filing: 08.01.2014
(51) Int. Cl.: G06Q 30/06

(54) **Digital media lending system and method**

(30) Priority: 08.01.2013 GB 201300281
(71) Applicant: Bibliotheca Limited, Greater Manchester SK8 7BS (GB)
(72) Inventor: Chadbourne, Andrew, Stockport, Greater Manchester SK8 7BS (GB)
(74) Representative: Williams Powell

(57) **Abstract**

A digital media lending system, method and item representation are disclosed. The system comprises a check-out terminal (20) and an item representation corresponding to a digital media item, the item representation (30) including a machine readable identifier (35). The machine readable identifier (35) is readable by the check-out terminal (20) upon presentation of the item representation (30) at the terminal (20). Upon presentation of the item representation (30), the terminal (20) being arranged to read the machine readable identifier (35), identify the digital media item corresponding to the machine readable identifier and cause a copy of the digital media item to be made available to a digital media device (50) of a patron for consumption.

## Description

### Field of the Invention

The present invention relates to a system and method for supporting lending of digital media and is particularly applicable for use in providing a physical library with a mechanism to lend media such as electronic books.

### Background to the Invention

When a patron wants to a borrow a book or periodical he or she visits a library, finds the physical media in question and goes through a check-out procedure to take it home to read and subsequently return.

Electronic access to digital material is available at some libraries. Usually, the patron is required to view the digital material from a network computer within a library, much in the way that archived material used to have been viewed for many years on microfiche and the like.

There is a general trend supplement physically printed media with electronic book formats that are displayed by personal e-readers. While it is currently possible for libraries to lend electronic books (or 'eBooks') to patrons via a website, accessible internally and/or externally of the physical library, this process can be complicated for people who are not computer savvy (requiring various software to be downloaded and installed).

Additionally, libraries must purchase eBooks using the same rental model applied to physical books - i.e. one eBook for each loan. This means that once an eBook is loaned to one person it is not available to anyone else until the loan expires. This can cause confusion for patrons who can see titles online but are not able to borrow them.

Particularly as more and more publications are published only electronically, it is highly desirable for libraries to offer lending of eBooks and similar electronic media.

### Statement of the Invention

According to an aspect of the present invention, there is provided 1. A digital media lending system comprising:
a check-out terminal; and,
an item representation corresponding to a digital media item, the item representation including a machine readable identifier,
wherein the machine readable identifier is readable by the check-out terminal upon presentation of the item representation at the terminal, upon presentation of the item representation, the terminal being arranged to read the machine readable identifier, identify the digital media item corresponding to the machine readable identifier and cause a copy of the digital media item to be made available to a digital media device of a patron for consumption.

Preferably, the item representation is a dummy item having substantially a size and visual appearance corresponding to a non-digital version of the media item.

Where a digital media item comprises an eBook, the dummy item preferably comprises a dummy book. Likewise, dummy magazines, CD and DVD boxes and the like may be used for corresponding digital media items. Preferably, the dummy book has the size and appearance of a book and includes a front and a back cover. Other dummy items preferably have the same or similar dimensions and appearance to real world counterparts preferably so as to be recognisable to the patron as corresponding to that media item.

Preferably, the front cover includes a title and book artwork and the back cover includes a human readable abstract.

The machine readable identifier may comprise a barcode positioned on a spine or on the front or back cover of the dummy book.

Preferably, the dummy book has no pages.

Preferably, the machine readable identifier comprises an RFID tag disposed on or within a body of the item representation.

The check-out terminal may be configured to communicate with a library database to cause data on the loan of the digital media item to be added to the patron's account.

The system preferably further comprises an item representation store for retaining item representations after checkout at the terminal until loan of the digital media item has ended.

The item representation store preferably includes a secure bin to receive the item representation during or after check-out.

The system may include an actuator configured to deactivate the machine readable identifier of the item representation during check-out. The actuator may be arranged to deactivate the machine readable identifier as it is placed in the bin.

According to another aspect of the present invention, there is provided a digital media lending method comprising:
providing, in a lending library for patrons, an item representation corresponding to each of a plurality of lendable digital media items, each item representation comprising a dummy item having substantially a size and visual appearance corresponding to a non-digital version of the respective digital media item and including a machine readable identifier; and,
upon presentation of the item representation at a check-out terminal, reading the machine readable identifier, identifying a digital media item corresponding to the machine readable identifier and causing a copy of the digital media item to be made available to a digital media reading device of a patron for consumption for a loan period.

The method may further comprise deactivating the machine readable identifier for the loan period.

The method may further comprise retaining checked-out item representations in a store that is inaccessible to patrons until the loan period has ended.

The method may further comprise communicating with a database of the lending library to cause data on the loan of the digital media item to be added to the patron's account.

According to another aspect of the present invention, there is provided an item representation for providing, in a lending library for patrons, a physical representation of a lendable digital media item, the item representation comprising a dummy item having substantially a size and visual appearance corresponding to a non-digital version of the respective digital media item and including a machine readable identifier corresponding to the digital media item, the machine readable identifier being configured to cause lending of the digital media item to a patron upon checking out of the item representation at the lending library.

Where the digital media item comprises an eBook, the dummy item preferably comprises a dummy book including a front and a back cover, the front cover including a title and book artwork and the back cover including a human readable abstract.

In one embodiment, a digital media lending system comprising a check-out terminal and an item representation corresponding to a digital media item, the item representation including a machine readable identifier that is readable by the check-out terminal upon presentation of the item representation at the terminal, wherein upon presentation of the item representation, the terminal being arranged to read the machine readable identifier, identify the digital media item corresponding to the machine readable identifier and cause a copy of the digital media item to be communicated to a digital media reading device of a patron for consumption.

In preferred embodiments, digital media items such as eBooks are given a physical representation, referred to as an item representation, for display and selection by a patron in a library. An eBook item representation preferably has the appearance of a regular book, showing the front and back cover artwork - allowing patrons to read the abstract.

The item representation is in one embodiment a physical representation of an eBook, which allows for easy browsing on the shelf. Each item representation is a physical unit that contains an RFID tag and/or a barcode or other machine readable identifier that can be used to check-out the item for borrowing.

The item representation reflects stock availability. If an item representation is not available for browsing on the shelf, then the eBook is not available for rental.

A check-out terminal such as a kiosk is arranged to read machine readable identifiers on item representations and causes transmission of the corresponding eBook to the patron. The check-out terminal can optionally link to library databases and/or a local or remote eBook aggregation platform to seamlessly add the loan to the patron account and cause download of the e-content to the patron's device.

### Brief Description of the Drawings

Embodiments of the present invention will now by described by way of example only with reference to the accompanying drawing, in which:
Figure 1 is a schematic diagram of a system according to an embodiment of the present invention;
Figures 2a-2c are interior, front and rear views of an item representation according to an embodiment of the present invention; and,
Figure 3 is a schematic diagram including a check-out terminal according to an embodiment of the present invention.

### Detailed Description

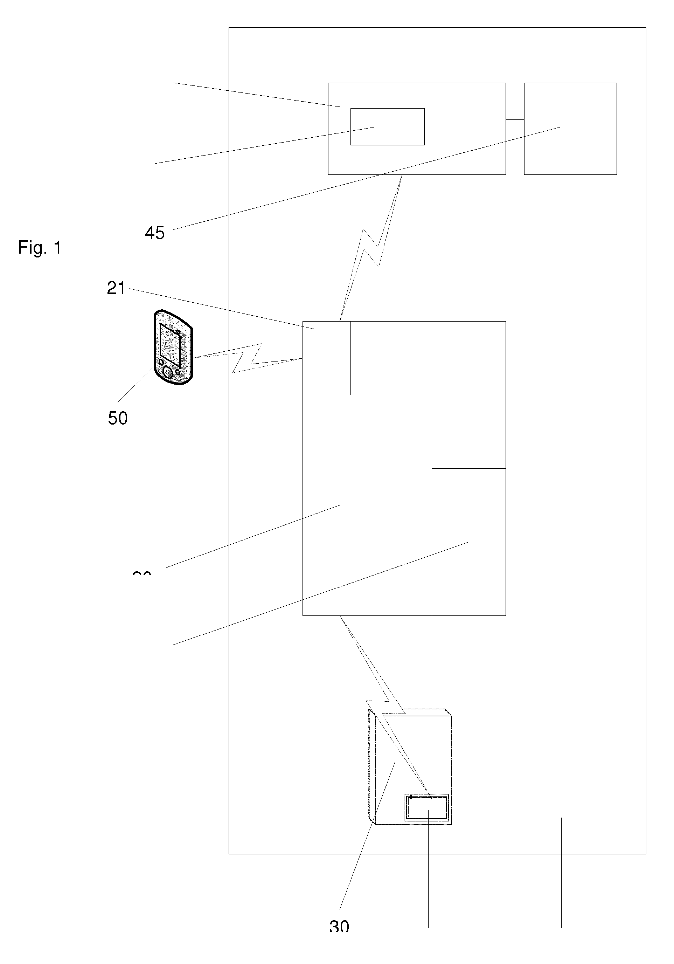

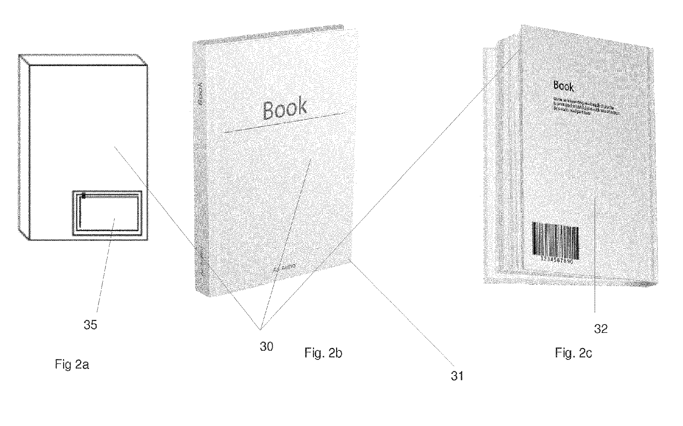

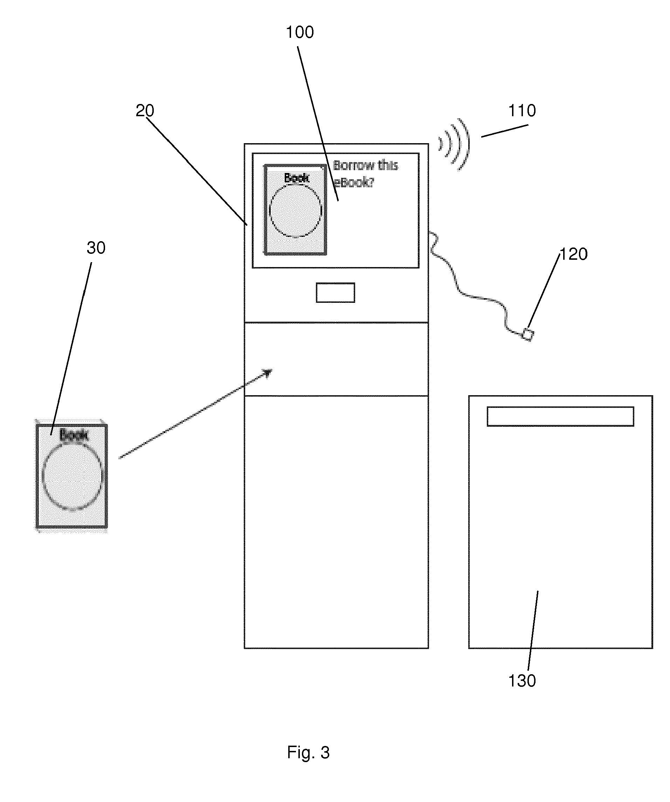

Figure 1 is a schematic diagram illustrating components of a system 10 for lending electronic media items to a visitor of a library. Figures 2a-2c are interior, front and rear views of an item representation according to an embodiment of the present invention. Figure 3 is a schematic diagram including a check-out terminal according to an embodiment of the present invention.

The library is a physical type library as opposed to a virtual/online one and would typically be a building or institution in charge of the collection of printed material or other items available to for loan to members. A library typically requires membership from patrons before allowing them to borrow an item.

The system 10 includes a check-out terminal 20, an item representation 30 for each lendable media item and a server 40.

Each item representation 30 is preferably of the dimensions of a paperback book and most preferably is a dummy book having a spine and front 31 and back 32 cover that have the same or similar appearance to a physical book publication of the media item. Preferably, the item representation contains no printed content beyond the front and back cover. The dummy book may be a box (optionally one which is non-openable) to which the spine, front and back covers are adhered, inserted behind a transparent window or cover or similar.

The item representation 30 includes a machine readable identifier 35. Preferably the machine readable identifier is a Radio Frequency Identifier (RFID) tag, although it will be appreciated that other machine readable identifiers may be used in addition or as alternatives.

The system 40 is connected to or includes a data repository 45 in which a digitally readable version of an item corresponding to the item representations 30 is stored. The system 40 also includes a database 41 associating each machine readable identifier with the corresponding digitally readable version of the item in the data repository 45.

The check-out terminal 20 is installed at the library and is used to check-out books and other media so that the patron may take them home to read/consume. Check-out terminals vary in form factor and in the mechanism used to check out books. They can scan barcodes, RFID tags or other identifiers on items or use other technology to identify the items being presented. Each item presented is associated with the patron's account with the library and loans of the books may be subject to limits on total number of items to be lent to an individual, whether there are items overdue for return, whether fines imposed for late returns have been paid etc.

The check-out terminal 20 may be a self-service type terminal or it may be operated by a member of the library staff.

The check-out terminal 20, in addition to allowing checking out conventional books and other items to a patron, is arranged to communicate with a digital media reader device 50 of the patron. Upon presenting an item representation 30 to the check-out terminal 20 and the check-out terminal 20 identifies the machine readable identifier 35 as being for an item representation 30, the check-out terminal 20 is arranged to cross reference with the database 41 at the server 40 to use the machine readable identifier 35 to identify the corresponding digitally readable version in the data repository 45. The check-out terminal 20 is then arranged to cause the digitally readable version of the item corresponding to the item representation 30 to be either communicated to the digital media reader device 50 of the patron or sent to their online account for download at a later time, perhaps in their own home.

In a preferred embodiment, the check-out terminal 20 includes a communications module 21 for communicating with the digital media reader device 50 of the patron. The communications module 21 may include a cable and connector to interface to the digital media reader device 50 such as by a USB type connection. Alternatively or in addition, the communications module 21 may include a wireless transceiver for wirelessly communicating with the digital media reader device 50 of the patron, by protocols and mechanisms such as WiFi, BlueTooth or the like. In another alternative, the communications module 21 may include a wired network connection to a network via which the digital media reader device 50 can be reached.

In one embodiment, the communications module 21 interfaces the check-out terminal 20 with a library-wide wireless network, to which the patron's digital media reading device may be given access. In this embodiment, when the digitally readable version of the item corresponding to the item representation 30 is to be communicated to the digital media reader device 50 of the patron, it is pushed (such as with the communications module initiating a connection) to the digital media reader device 50 over the network or it may be indicated as being available for download to the digital media reader device 50 when the device 50 next connects to the network or next checks for downloads. Optionally, the network may extend beyond the physical boundaries of the library and may be remotely accessible by the patron and/or patron device 50.

In one embodiment, power of the wireless communication system for the communications module 21 is controlled or set such that it can communicate only with digital media reader devices 50 that are in the local proximity (approximately 0-5m) of the library perimeter or of the check-out terminal 20.

The library may require the patron's digital media reading device 50 to be registered in order to receive loaned books (in which case, the digitally readable version of the item may include a license, cryptographic key or similar that prevents devices other than that registered from reading/consuming the item). Additionally, the lending term set by the library is preferably encoded in the digitally readable version of the item or in an accompanying data file enabling access to the item such that the digitally readable item can be forced to expire and become non-readable/non-consumable after expiry. Upon expiry, the patron's device 50 may be configured to delete the digitally readable version of the item or this may be left as to the patron as a manual activity. However, it will be appreciated that there is nothing that need to be returned to the library.

As part of the checkout process, a database of the library holding data on items loaned to the patron is updated to reflect the loaned digitally readable media item and optionally limit the number of loaned digitally readable media items to the patron to a predetermined number. A background process is also preferably operated by the library to clear the loan records for digitally readable media items once the loan period has expired.

In one embodiment, the background process is arranged to automatically flag the loan of the eBook as having expired - either as a result of the end date occurring, or upon detection (or being informed of) the patron removing the eBook from their device (and in effect "returning" the eBook early). The flag can then prompt the library staff to re-populate the shelf with the item representation. In one embodiment, the prompt may be an email or other scheduled report or alert to staff, preferably which is printable.

In a preferred embodiment, the library includes one or more bins 60 into which item representations are deposited upon being checked-out at a terminal. The bins may be secure, requiring a key or code to be unlocked and emptied. Upon being emptied, the item representations are preferably moved to a storage area until expiry of the lending period, as discussed above, at which time they can be returned to shelves for lending to another patron.

Optionally, the bin may include a mechanism to deactivate the machine readable identifier of the item representation as it is placed in the bin. Optionally, the bin may be part of, or connected to, the terminal. Optionally, the bin may include a reader which is arranged to read each item representation as it is placed in the bin. The bin may have a letter box style opening or similar and may include a chute, conveyor or other mechanism that controls the descent or passage of the item into the bin, the reader being positioned such that the item passes through the field of the reader during its descent or passage. In this manner, checking-out of the item representation is performed by placing the item in the bin. In an alternative embodiment, checking-out may be a two stage process with the item representation being read twice, once by the terminal and once on entry into the bin so as to ensure it is removed from circulation.

The general steps performed in one embodiment are as follows, although it will be appreciated that other sequences of steps or sequences of different steps may be used:

### Step 1: Browsing and selection

The patron is able to browse the selection of item representations on the shelf/physically on display in the library. All titles are preferably arranged such that the cover artwork can be seen and abstracts read. If the item representation is on the shelf then the patron knows that the digitally readable media item (such as an eBook) version is available in the library. Multiple copies of an item representation (if purchased by the library) may be shown on shelf, i.e. 3 physical copies means that 3 eBook licences exist.

### Step 2: Check-out of item representation

The item representation is taken to the check-out terminal 20. Note that the check-out terminal 20 may be a self-service checkout station, a kiosk, desk or other such implementation. At the check-out terminal 20 the patron borrows the item representation by scanning either the RFID tag, barcode or other identifier. Note that multiples item representations may be borrowed at the same time, and in a single transaction. Optionally, the terminal 20 shows a representation of the "book" on a display 100 and prompts the patron to confirm he or she wishes to borrow the item.

### Step 3: System update and download

The check-out terminal 20 updates the library database to confirm the eBook rental and will then in one embodiment download the e-content to the kiosk where it is cached temporarily.

### Step 4: (optional) Connect the patron eBook reader to the kiosk

The patron connects their eBook reading device to the check-out terminal 20 via one of a range of methods, including USB cable 120, Bluetooth or Wi-Fi 110. Preferably, the connection supports any type of eBook reading device and is not platform specific.

### Step 5: e-content is downloaded

Once the eBook reading device is connected, the e-content is automatically downloaded to the device from the check-out terminal 20.

### Step 6: Deposit the item representation

In order to prevent another library patron attempting to borrow the item, the item representation is deposited into a secure return bin 130 where it can be stored until the e-content has expired on the patron's eBook reading device and placed back on the shelf.

### Step 7: e-content expires

Using existing software methods, the e-content will automatically expire on the patron's eBook reading device. When this occurs, the library staff will preferably be notified to replace the original item representation back onto the shelf, ready for reloading.

In one alternate embodiment, a patron instead of connecting his or her eBook reading device to the check-out terminal 20, may instead log on to a remote system in order to borrow and download an eBook remotely, such as from home. In such an embodiment, once the loan of the eBook has been approved by the remote system, the patron can download the eBook immediately or alternatively have the eBook delivered or made available to an online account for download later.

At least aspects of the illustrative embodiments can take the form of a computer program product accessible from a computer-usable or computer-readable medium providing program code for use by, or in connection with, a computer or any instruction execution system. For the purposes of this description, a computer-usable or computer readable medium can be any recordable-type tangible apparatus that can contain, store, communicate, propagate, or transport the program for use by or in connection with the instruction execution system, apparatus, or device.

It will be appreciated that the principles of the present invention could be applied to other media and form factors with item representations for magazines, CD's, DVDs and the like being made available on shelf and enabling the patron to borrow or purchase a digital equivalent.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

It will be appreciated that the principles of the present invention could also be applied to book shops and other book selling organisations in which the eBook would be permanently transferred to the patron's device upon the patron presenting an item representation selected from the shelves and making a payment at the kiosk/terminal.

It will further be appreciated that in selected embodiments the check-out terminal may be in the form of a patron's mobile device such as a smart phone having a barcode reader and/or RFID/NFC reader and having appropriate programming such as via a downloadable application, Java application, or running a particular web-page. In such an embodiment, the patron may retrieve the dummy item from the shelf of a library, use his or her mobile phone to read the barcode, NFC tag or the like of the item which would then cause the loan process of the digital media item to be initiated and the digital media item to be made available to the patron. After this, the patron may be prompted to place the item representation in a check-out bin or similar to prevent a further patron from attempting to borrow the corresponding digital media item. Optionally, the user's device may deactivate the machine readable identifier (for example by writing to the item's NFC tag to disable it or to indicate it corresponds to a digital media item that has already been loaned).

Whilst a number of different combinations of features have been described with reference to different embodiments of the present invention, the skilled person will appreciate that all the features described are complementary and could be combined in different combinations to those specifically described without any technical difficulty. Furthermore, whilst some of the above description has been directed to a check-out terminal incorporating various features, it will be apparent that a suitable add-on unit could be installed and arranged to communicate with an existing check-out terminal. The reader will appreciate that such an add-on unit falls within the scope of the present invention.

This application claims priority from UK patent application No. 1300281.1, filed on 8 January 2013, the contents of which and the contents of the abstract accompanying this application are incorporated by reference.

## Claims

1. A digital media lending system comprising:
a check-out terminal; and,
an item representation corresponding to a digital media item, the item representation including a machine readable identifier,
wherein the machine readable identifier is readable by the check-out terminal upon presentation of the item representation at the terminal, upon presentation of the item representation, the terminal being arranged to read the machine readable identifier, identify the digital media item corresponding to the machine readable identifier and cause a copy of the digital media item to be made available to a digital media device of a patron for consumption.

2. The digital media lending system as claimed in claim 1, wherein the item representation is a dummy item having substantially a size and visual appearance corresponding to a non-digital version of the media item.

3. The digital media lending system as claimed in claim 2, wherein at least selected ones of the digital media items comprise eBooks, the dummy item for an eBook comprising a dummy book.

4. The digital media lending system as claimed in claim 3, wherein the dummy book has the size and appearance of a book and includes a front and a back cover.

5. The digital media lending system as claimed in claim 4, wherein the front cover includes a title and book artwork and the back cover includes a human readable abstract.

6. The digital media lending system as claimed in claim 4 or 5, wherein the machine readable identifier comprises a barcode positioned on a spine or on the front or back cover of the dummy book.

7. The digital media lending system as claimed in claim 4 or 5, wherein the dummy book has no pages.

8. The digital media lending system as claimed in any preceding claim, wherein the machine readable identifier comprises an RFID tag disposed on or within a body of the item representation.

9. The digital media lending system as claimed in any preceding claim, wherein the check-out terminal is configured to communicate with a library database to cause data on the loan of the digital media item to be added to the patron's account.

10. The digital media lending system as claimed in any preceding claim, further comprising an item representation store for retaining item representations after checkout at the terminal until loan of the digital media item has ended.

11. The digital media lending system as claimed in claim 10, wherein the item representation store includes a secure bin to receive the item representation during or after check-out.

12. The digital media lending system as claimed in any preceding claim, further comprising an actuator configured to deactivate the machine readable identifier of the item representation during check-out.

13. The digital media lending system of claim 12 when dependent on claim 11, wherein the actuator is arranged to deactivate the machine readable identifier as it is placed in the bin.

14. A digital media lending method comprising:
providing, in a lending library for patrons, an item representation corresponding to each of a plurality of lendable digital media items, each item representation comprising a dummy item having substantially a size and visual appearance corresponding to a non-digital version of the respective digital media item and
including a machine readable identifier; and,
upon presentation of the item representation at a check-out terminal, reading the machine readable identifier, identifying a digital media item corresponding to the machine readable identifier and causing a copy of the digital media item to be made available to a digital media reading device of a patron for consumption for a loan period.

15. The digital media lending method of claim 14, further comprising deactivating the machine readable identifier for the loan period.
